# EUROPÄISCHE PATENTSCHRIFT

(11) **EP 4 253 919 B1**
(45) Veröffentlichungstag und Bekanntmachung des Hinweises auf die Patenterteilung: **26.11.2025**
(21) Anmeldenummer: 23154921.3
(22) Anmeldetag: 03.02.2023
(51) Int. Cl.: G01F 1/58, G01F 1/60, G01F 25/10

(54) **MAGNETISCH-INDUKTIVES DURCHFLUSSMESSGERÄT UND VERFAHREN ZUM BETREIBEN EINES SOLCHEN**
MAGNETIC-INDUCTIVE FLOW METER AND METHOD FOR OPERATING IT
DÉBITMÈTRE MAGNÉTO-INDUCTIF ET PROCÉDÉ DE FONCTIONNEMENT D'UN TEL DÉBITMÈTRE

(30) Priorität: 28.03.2022 DE 102022107279
(43) Veröffentlichungstag der Anmeldung: 04.10.2023
(73) Patentinhaber: Krohne Messtechnik GmbH, 47058 Duisburg (DE)
(72) Erfinder: Brockhaus, Herr Helmut, 46145 Oberhausen (DE)
(74) Vertreter: Gesthuysen Patentanwälte

(56) Entgegenhaltungen:
- DE-A1- 102006 033 112
- DE-A1- 102007 014 469
- DE-A1- 102014 119 453

## Beschreibung

Die Erfindung betrifft zum einen ein magnetisch-induktives Durchflussmessgerät. Dieses weist ein Messrohr, einen Magnetfeldgenerator, eine erste und eine zweite Messelektrode, eine erste und eine zweite Messleitung und eine Steuerung mit einem ersten und einem zweiten Messanschluss auf. Zum einen sind die erste Messelektrode und der erste Messanschluss über die erste Messleitung und zum anderen die zweite Messelektrode und der zweite Messanschluss über die zweite Messleitung elektrisch miteinander verbunden.

Der Magnetfeldgenerator ist ausgebildet, ein Magnetfeld in einem durch das Messrohr strömenden Medium zu erzeugen, sodass ein zwischen dem ersten Messanschluss und dem zweiten Messanschluss anliegendes Durchflusssignal in das Medium induziert wird. Die Steuerung ist ausgebildet, einen Durchfluss des Mediums durch das Messrohr unter Verwendung des Durchflusssignals zu bestimmen.

Im Betrieb des magnetisch-induktiven Durchflussmessgeräts wird ein Medium durch das Messrohr geströmt.

Zum anderen betrifft die Erfindung ein Verfahren zum Betreiben eines magnetisch-induktiven Durchflussmessgeräts. Das magnetisch-induktive Durchflussmessgerät weist ebenfalls ein Messrohr, einen Magnetfeldgenerator, eine erste und eine zweite Messelektrode, eine erste und eine zweite Messleitung und eine Steuerung mit einem ersten und einem zweiten Messanschluss auf. Auch hier sind zum einen die erste Messelektrode und der erste Messanschluss über die erste Messleitung und zum anderen die zweite Messelektrode und der zweite Messanschluss über die zweite Messleitung elektrisch miteinander verbunden.

Gemäß dem Verfahren wird ein Medium durch das Messrohr geströmt. Von dem Magnetfeldgenerator wird ein Magnetfeld im durch das Messrohr strömenden Medium erzeugt, sodass ein zwischen dem ersten und dem zweiten Messanschluss anliegendes Durchflusssignal in das Medium induziert wird. Von der Steuerung wird ein Durchfluss des Mediums durch das Messrohr unter Verwendung des Durchflusssignals bestimmt.

Für gewöhnlich ist die Steuerung zur Steuerung des Magnetfeldgenerators ausgebildet und ist der Magnetfeldgenerator zur Steuerung durch die Steuerung ausgebildet. Dementsprechend wird der Magnetfeldgenerator im Betrieb des magnetisch-induktiven Durchflussmessgeräts von der Steuerung gesteuert.

Das Durchflusssignal wird also in das Medium induziert, von der ersten und zweiten Messelektrode abgegriffen und von der ersten und zweiten Messleitung zum ersten und zweiten Messanschluss der Steuerung geführt. Es ist zum einen proportional zu einer Stärke des Magnetfelds und zum anderen proportional zu einer Strömungsgeschwindigkeit des Mediums im Messrohr. Zum Beispiel ist es eine Spannung. Bei dem Durchfluss des Mediums handelt es sich zum Beispiel um einen Volumen- oder Massedurchfluss.

Die Schrift DE 10 2014 119 453 A1 offenbart das Signalisieren eines Kabelbruchs in einer Messleitung eines magnetisch-induktiven Durchflussmessgerätes.

Ein Kurzschluss in der ersten und/oder zweiten Messleitung würde das zwischen dem ersten und zweiten Messanschluss anliegende Durchflusssignal verfälschen und somit auch die Bestimmung des Durchflusses des Mediums durch das Messrohr. Die erste und die zweite Messleitung können auch mehrstückig ausgeführt sein und insbesondere auch Leiterbahnen umfassen.

Aufgabe der vorliegenden Erfindung ist somit, ein magnetisch-induktives Durchflussmessgerät und ein Verfahren zum Betreiben eines solchen anzugeben, welches die Bestimmung eines solchen Kurzschlusses ermöglicht.

Die Aufgabe ist zum einen durch ein Verfahren mit den Merkmalen von Anspruch 1 gelöst. Das erfindungsgemäße Verfahren modifiziert das zuvor beschriebene Verfahren zunächst dadurch, dass von der Steuerung die folgenden Verfahrensschritte zusätzlich ausgeführt werden:
- Erzeugen und Einspeisen eines Sendesignals und Empfangen eines vom Sendesignal bewirkenden Empfangssignals am ersten und zweiten Messanschluss. Das Einspeisen des Sendesignals und das Empfangen des Empfangssignals erfolgen dabei derart, dass diese weder Signale zur Bestimmung des Durchflusses beeinflussen noch von diesen Signalen beeinflusst werden.
- Bestimmen einer Impedanz mit einem Impedanzbetrag und einer Impedanzphase unter Verwendung des Sendesignals und des Empfangssignals. Demnach wird die Impedanz zwischen dem ersten und zweiten Messanschluss nach Betrag und Phase bestimmt.
- Signalisieren eines Kurzschlusses, wenn der Impedanzbetrag kleiner als ein erster Grenzimpedanzbetrag und die Impedanzphase größer als eine Grenzimpedanzphase ist. Somit werden von der Steuerung der bestimmte Impedanzbetrag mir dem ersten Grenzimpedanzbetrag und die bestimmte Impedanzphase mit der Grenzimpedanzphase verglichen.

Auf diese Weise ist eine zuverlässige Bestimmung eines Kurzschlusses in der ersten und/oder zweiten Messleitung möglich, ohne dass die erste und/oder zweite Messleitung selbst inspiziert werden.

Für eine Ausgestaltung des Verfahrens weist das magnetisch-induktive Durchflussmessgerät eine dritte und eine vierte Messleitung und die Steuerung einen dritten und vierten Messanschluss auf. Zum einen sind die erste Messelektrode und der dritte Messanschluss über die dritte Messleitung und zum anderen die zweite Messelektrode und der vierte Messanschluss über die vierte Messleitung elektrisch miteinander verbunden.

Von der Steuerung wird zum einen unter Verwendung des Sendesignals und eines zwischen dem ersten und dem dritten Messanschluss anliegenden ersten Messsignals eine Leitungsimpedanz der ersten Messleitung bestimmt und wird zum anderen unter Verwendung des Sendesignals und eines zwischen dem zweiten und dem vierten Messanschluss anliegenden zweiten Messsignals eine Leitungsimpedanz der zweiten Messleitung bestimmt. Weiter werden von der Steuerung die Leitungsimpedanz der ersten Messleitung und die Leitungsimpedanz der zweiten Messleitung bei der Bestimmung der Impedanz berücksichtigt. Das erste und das zweite Messsignal werden dabei von dem Sendesignal bewirkt. Vorzugsweise fließt zwar durch die erste und die zweite Messleitung ein Strom, nicht jedoch durch die dritte und vierte Messleitung. Durch die Berücksichtigung der Leitungsimpedanz der ersten Messleitung und der Leitungsimpedanz der zweiten Messleitung bei der Bestimmung der Impedanz wird die Bestimmung, ob ein Kurzschluss vorliegt oder nicht, zuverlässiger, da diese Bestimmung im Bezug auf die erste Grenzimpedanz und die Grenzimpedanzphase erfolgt.

Die erste Grenzimpedanz wird zum Beispiel als 50 Ohm gewählt, und die Impedanzphase wird als -10° gewählt. Somit wird von der Steuerung ein Kurzschluss signalisiert, wenn zum einen der Impedanzbetrag kleiner als 50 Ohm ist und zum anderen die Impedanzphase größer als -10° ist.

In einer weiteren Ausgestaltung des Verfahrens wird ein Kurzschluss auch dann von der Steuerung signalisiert, wenn der Impedanzbetrag kleiner als ein zweiter Grenzimpedanzbetrag ist. Dieser zweite Grenzimpedanzbetrag ist kleiner als der erste Grenzimpedanzbetrag. Die Signalisierung eines Kurzschlusses erfolgt bei dieser Ausgestaltung unabhängig von der Impedanzphase. Durch diese Ausgestaltung wird die Zuverlässigkeit des Verfahrens weiter verbessert. Und zwar werden auch Kurzschlüsse erkannt, die eine für einen Kurzschluss sehr geringe Impedanz aufweisen. Diese sind dadurch gekennzeichnet, dass die Impedanzphase nicht zuverlässig bestimmbar ist.

Der zweite Grenzimpedanzbetrag wird zum Beispiel als 2 Ohm gewählt. Somit wird von der Steuerung ein Kurzschluss signalisiert, wenn der Impedanzbetrag kleiner als 2 Ohm ist.

In einer weiteren Ausgestaltung wird das Sendesignal von der Steuerung mit einer Frequenz zwischen 500 Hz und 1 kHz erzeugt. In einer dazu alternativen Ausgestaltung wird das Sendesignal von der Steuerung mit zwei Frequenzen zwischen 500 Hz und 1 kHz erzeugt. Die Verwendung eines Sendesignals mit einer Frequenz in dem genannten Frequenzband oder mit zwei Frequenzen in diesem erhöht die Zuverlässigkeit der Bestimmung des Kurzschlusses.

In einer weiteren Ausgestaltung wird von der Steuerung die Bestimmung der Impedanz unter zusätzlicher Verwendung einer Länge der ersten Messleitung und einer Länge der zweiten Messleitung durchgeführt. Dadurch wird die Zuverlässigkeit der Bestimmung eines Kurzschlusses weiter erhöht.

Die Aufgabe ist auch durch ein magnetisch-induktives Durchflussmessgerät mit den Merkmalen von Anspruch 9 gelöst. Dieses ist dadurch gekennzeichnet, dass die Steuerung wie folgt ausgebildet ist:
Erzeugen und Einspeisen eines Sendesignals und Empfangen eines vom Sendesignal wirkenden Empfangssignals am ersten Messanschluss und zweiten Messanschluss.
- Bestimmen einer Impedanz mit einem Impedanzbetrag und einer Impedanzphase unter Verwendung des Sendesignals und des Empfangssignals.
- Signalisieren eines Kurzschlusses, wenn der Impedanzbetrag kleiner als ein erster Grenzimpedanzbetrag und die Impedanzphase größer als eine Grenzimpedanzphase ist.

In einer Ausgestaltung des magnetisch-induktiven Durchflussmessgeräts weist dieses eine dritte und eine vierte Messleitung und die Steuerung einen dritten und einen vierten Messanschluss auf. Zum einen sind die erste Messelektrode und der dritte Messanschluss über die dritte Messleitung und zum anderen die zweite Messelektrode und der vierte Messanschluss über die vierte Messleitung elektrisch miteinander verbunden.

Die Steuerung ist ausgebildet, zum einen unter Verwendung des Sendesignals und eines zwischen dem ersten und dritten Messanschluss anliegenden ersten Messsignals eine Leitungsimpedanz der ersten Messleitung zu bestimmen und zum anderen unter Verwendung des Sendesignals und eines zwischen dem zweiten und vierten Messanschluss anliegenden zweiten Messsignals eine Leitungsimpedanz der zweiten Messleitung zu bestimmen. Weiter ist die Steuerung ausgebildet, die Leitungsimpedanz der ersten Messleitung und die Leitungsimpedanz der zweiten Messleitung bei der Bestimmung der Impedanz zu berücksichtigen.

In einer weiteren Ausgestaltung ist die Steuerung ausgebildet, eines der zuvor beschriebenen Verfahren auszuführen.

Im Übrigen gelten die Ausführungen zum Verfahren für das magnetisch-induktive Durchflussmessgerät entsprechend und umgekehrt.

Im Einzelnen ist eine Vielzahl an Möglichkeiten gegeben, das magnetisch-induktive Durchflussmessgerät und das Verfahren zum Betreiben eines magnetisch-induktiven Durchflussmessgeräts auszugestalten und weiterzubilden. Dazu wird verwiesen zum einen auf die den unabhängigen Ansprüchen nachgeordneten Ansprüche und zum anderen auf die nachfolgende Beschreibung eines bevorzugten Ausführungsbeispiels in Verbindung mit der Zeichnung. In der Zeichnung zeigt
- Figur 1: ein Ausführungsbeispiel eines magnetisch-induktiven Durchflussmessgeräts in einer ersten Ansicht,
- Figur 2: das Ausführungsbeispiel in einer zweiten Ansicht und
- Figur 3: einen Ablaufplan eines Ausführungsbeispiels eines Verfahrens zum Betreiben des magnetisch-induktiven Durchflussmessgeräts.

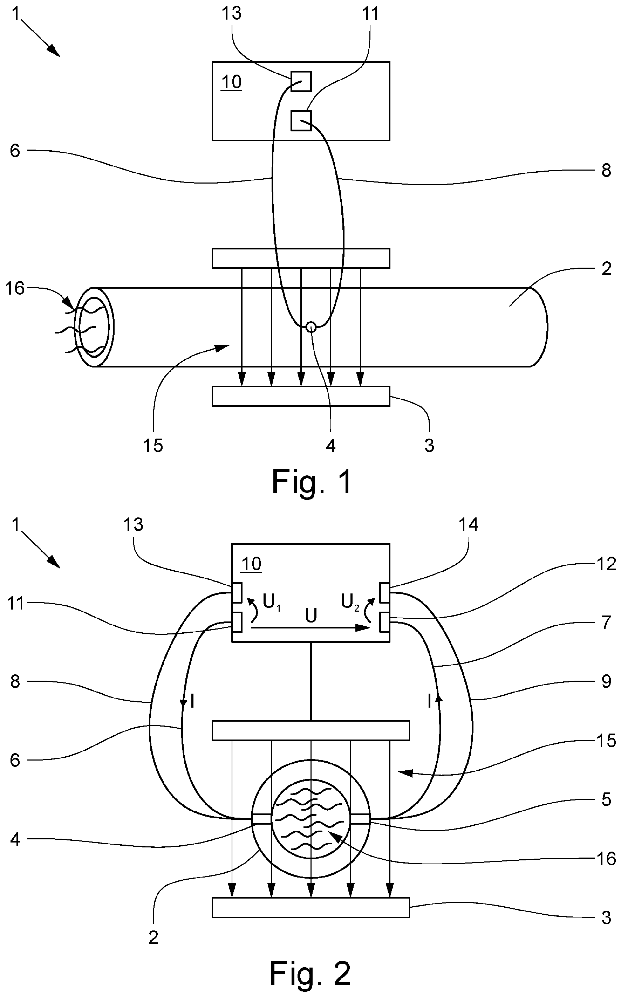

Die Figuren 1 und 2 zeigen in unterschiedlichen Ansichten eine abstrahierte Darstellung wesentlicher Komponenten eines Ausführungsbeispiels eines magnetisch-induktiven Durchflussmessgeräts 1. Das magnetisch-induktive Durchflussmessgerät 1 weist ein Messrohr 2, einen Magnetfeldgenerator 3, eine erste Messelektrode 4, eine zweite Messelektrode 5, eine erste Messleitung 6, eine zweite Messleitung 7, eine dritte Messleitung 8, eine vierte Messleitung 9 und eine Steuerung 10 mit einem ersten Messanschluss 11, einem zweiten Messanschluss 12, einem dritten Messanschluss 13 und einem vierten Messanschluss 14 auf.

Die erste Messelektrode 4 ist zum einen über die erste Messleitung 6 mit dem ersten Messanschluss 11 und zum anderen über die dritte Messleitung 8 mit dem dritten Messanschluss 13 der Steuerung 10 elektrisch verbunden. Die zweite Messelektrode 5 ist zum einen über die zweite Messleitung 7 mit dem zweiten Messanschluss 12 und zum anderen über die vierte Messleitung 9 mit dem vierten Messanschluss 14 elektrisch verbunden.

Der Magnetfeldgenerator 3 ist ausgebildet, ein Magnetfeld 15 in einem durch das Messrohr 2 strömenden Medium 16 zu erzeugen, sodass eine zwischen dem ersten Messanschluss 11 und dem zweiten Messanschluss 12 anliegendes Durchflusssignal in das Medium 16 induziert wird.

Die Steuerung 10 ist ausgebildet, einen Durchfluss des Mediums 16 durch das Messrohr 2 unter Verwendung des Durchflusssignals zu bestimmen.

Die Figuren 1 und 2 zeigen das magnetisch-induktive Durchflussmessgerät 1 im Betrieb, weshalb das Medium 16 durch das Messrohr 2 geströmt wird und vom Magnetfeldgenerator 3 das Magnetfeld 15 im durch das Messrohr 2 strömende Medium 16 erzeugt wird, sodass das zwischen dem ersten Messanschluss 11 und dem zweiten Messanschluss 12 anliegende Durchflusssignal in das Medium 16 induziert wird. Der Magnetfeldgenerator 3 wird dabei durch die Steuerung 10 gesteuert.

Von der Steuerung 10 wird der Durchfluss des Mediums 16 durch das Messrohr 2 unter Verwendung des Durchflusssignals bestimmt.

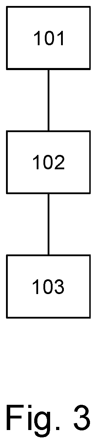

Figur 3 zeigt einen Ablaufplan eines Ausführungsbeispiels eines Verfahrens zum Betreiben des magnetisch-induktiven Durchflussmessgeräts 1. Die Steuerung 10 ist ausgebildet, dieses Verfahren auszuführen, und führt es auch aus, da das magnetisch-induktive Durchflussmessgerät 1 im Betrieb ist.

In einem ersten Verfahrensschritt 101 wird ein Sendesignal erzeugt und am ersten Messanschluss 11 und zweiten Messanschluss 12 eingespeist. Weiter wird ein vom Sendesignal bewirktes Empfangssignal empfangen.

Vorliegend handelt es sich bei dem Sendesignal um ein Stromsignal I, welches in den ersten Messanschluss 11 eingeprägt wird. Das Stromsignal fließt über die erste Messleitung 6, die erste Elektrode 4, das Medium 16, die zweite Messelektrode 5, die zweite Messleitung 7 in den zweiten Messanschluss 12. Das Empfangssignal ist ein Spannungssignal U, welches zwischen dem ersten Messanschluss 11 und dem zweiten Messanschluss 12 anliegt.

In einem zweiten Verfahrensschritt 102 wird eine Impedanz mit einem Impedanzbetrag und einer Impedanzphase unter Verwendung des Sendesignals und des Empfangssignals bestimmt. Vorliegend wird die Impedanz gemäß Z = U/I bestimmt.

Weiter wird unter Verwendung des Sendesignals und eines zwischen dem ersten Messanschluss 11 und dem dritten Messanschluss 13 anliegenden ersten Messsignals eine Leitungsimpedanz der ersten Messleitung 6 bestimmt und zum anderen unter Verwendung des Sendesignals und eines zwischen dem zweiten Messanschluss 12 und dem vierten Messanschluss 14 anliegenden zweiten Messsignal eine Leitungsimpedanz der zweiten Messleitung 7 bestimmt. Die Leitungsimpedanz der ersten Messleitung 6 und die Leitungsimpedanz der zweiten Messleitung 9 wird bei der Bestimmung der Impedanz berücksichtigt.

Vorliegend fließt das Stromsignal I als das Sendesignal durch die erste Messleitung 6 und die zweite Messleitung 7, nicht jedoch durch die dritte Messleitung 8 und durch die vierte Messleitung 9. In diesem Ausführungsbeispiel weisen der dritte Messanschluss 13 und der vierte Messanschluss 14 eine hohe Eingangsimpedanz auf, sodass kein Strom durch diese fließt, welcher Messungen beeinträchtigt. Somit gibt es auch keinen Spannungsabfall durch das Stromsignal I in der dritten Messleitung 8 und in der vierten Messleitung 9. Das erste Messsignal ist eine erste Messspannung U₁ und das zweite Messsignal ist eine zweite Messspannung U₂. Die Leitungsimpedanz der ersten Messleitung 6 ist somit Z₁ = U₁/I und die der zweiten Messleitung 7 Z₂ = U₂/I.

In einem dritten Verfahrensschritt 103 wird ein Kurzschluss signalisiert, entweder wenn der Impedanzbetrag kleiner als ein erster Grenzimpedanzbetrag und die Impedanzphase größer als eine Grenzimpedanzphase ist, oder, wenn der Impedanzbetrag kleiner als ein zweiter Grenzimpedanzbetrag unabhängig von der Impedanzphase ist.

Dabei ist der Steuerung 10 als erster Grenzimpedanzbetrag 50 Ohm, als zweiter Grenzimpedanzbetrag 2 Ohm und als Impedanzphase -10 Grad vorgegeben worden. Das Sendesignal wird mit zwei Frequenzen zwischen 500 Hz und 1 kHz erzeugt, und zwar mit der Frequenz 500 Hz und der Frequenz 1 kHz.

Das Verfahren und die Bestimmung des Durchflusses beeinträchtigen einander nicht, da sie zeitlich separiert sind.

### Bezugszeichen

- 1: magnetisch-induktives Durchflussmessgerät
- 2: Messrohr
- 3: Magnetfeldgenerator
- 4: erste Messelektrode
- 5: zweite Messelektrode
- 6: erste Messleitung
- 7: zweite Messleitung
- 8: dritte Messleitung
- 9: vierte Messleitung
- 10: Steuerung
- 11: erster Messanschluss
- 12: zweiter Messanschluss
- 13: dritter Messanschluss
- 14: vierter Messanschluss
- 15: Magnetfeld
- 16: Medium
- I: Sendesignal
- U: Empfangssignal
- U₁: erstes Messsignal
- U₂: zweites Messsignal
- Z: Impedanz
- Z₁: erste Leitungsimpedanz
- Z₂: zweite Leitungsimpedanz
- 101: erster Verfahrensschritt
- 102: zweiter Verfahrensschritt
- 103: dritter Verfahrensschritt

## Patentansprüche

1. Verfahren zum Betreiben eines magnetisch-induktiven Durchflussmessgeräts (1),
wobei das magnetisch-induktive Durchflussmessgerät (1) ein Messrohr (2), einen Magnetfeldgenerator (3), eine erste Messelektrode (4), eine zweite Messelektrode (5), eine erste Messleitung (6), eine zweite Messleitung (7) und eine Steuerung (10) mit einem ersten Messanschluss (11) und einem zweiten Messanschluss (12) aufweist,
wobei zum einen die erste Messelektrode (4) und der erste Messanschluss (11) über die erste Messleitung (6) und zum anderen die zweite Messelektrode (5) und der zweite Messanschluss (12) über die zweite Messleitung (7) elektrisch miteinander verbunden sind,
wobei ein Medium (16) durch das Messrohr (2) geströmt wird,
wobei vom Magnetfeldgenerator (3) ein Magnetfeld (15) im durch das Messrohr (2) strömenden Medium (16) erzeugt wird, sodass ein zwischen dem ersten Messanschluss (11) und dem zweiten Messanschluss (12) anliegendes Durchflusssignal in das Medium (16) induziert wird,
wobei von der Steuerung (10) ein Durchfluss des Mediums (16) durch das Messrohr (2) unter Verwendung des Durchflusssignals bestimmt wird,
wobei von der Steuerung (10) die folgenden Verfahrensschritte ausgeführt werden:
- Erzeugen und Einspeisen eines Sendesignals (I) und Empfangen eines vom Sendesignal (I) bewirkten Empfangssignals (U) am ersten Messanschluss (11) und zweiten Messanschluss (12),
- Bestimmen einer Impedanz (Z) mit einem Impedanzbetrag und einer Impedanzphase unter Verwendung des Sendesignals (I) und des Empfangssignals (U) und
- Signalisieren eines Kurzschlusses, wenn der Impedanzbetrag kleiner als ein erster Grenzimpedanzbetrag und die Impedanzphase größer als eine Grenzimpedanzphase ist.

2. Verfahren nach Anspruch 1, wobei das magnetisch-induktive Durchflussmessgerät (1) eine dritte Messleitung (8) und eine vierte Messleitung (9) und die Steuerung (10) einen dritten Messanschluss (13) und einen vierten Messanschluss (14) aufweist,
wobei zum einen die erste Messelektrode (4) und der dritte Messanschluss (13) über die dritte Messleitung (8) und zum anderen die zweite Messelektrode (5) und der vierte Messanschluss (14) über die vierte Messleitung (9) elektrisch miteinander verbunden sind,
wobei von der Steuerung (10) zum einen unter Verwendung des Sendesignals (I) und eines zwischen dem ersten Messanschluss (11) und dem dritten Messanschluss (13) anliegenden ersten Messsignals (U₁) eine Leitungsimpedanz (Z₁) der ersten Messleitung (6) bestimmt wird und zum anderen unter Verwendung des Sendesignals (I) und eines zwischen dem zweiten Messanschluss (12) und dem vierten Messanschluss (14) anliegenden zweiten Messsignals (U₂) eine Leitungsimpedanz (Z₂) der zweiten Messleitung (7) bestimmt wird
und wobei von der Steuerung (10) die Leitungsimpedanz (Z₁) der ersten Messleitung (6) und die Leitungsimpedanz (Z₂) der zweiten Messleitung (7) bei der Bestimmung der Impedanz (Z) berücksichtigt werden.

3. Verfahren nach Anspruch 1 oder 2, wobei der erste Grenzimpedanzbetrag als 50 Ohm gewählt wird und die Impedanzphase als -10° gewählt wird.

4. Verfahren nach einem der Ansprüche 1 bis 3, wobei ein Kurzschluss auch dann signalisiert wird, wenn der Impedanzbetrag kleiner als ein zweiter Grenzimpedanzbetrag unabhängig von der Impedanzphase ist, und wobei der zweite Grenzimpedanzbetrag kleiner als der erste Grenzimpedanzbetrag ist.

5. Verfahren nach Anspruch 4, wobei der zweite Grenzimpedanzbetrag als 2 Ohm gewählt wird.

6. Verfahren nach einem der Ansprüche 1 bis 5, wobei von der Steuerung (10) das Sendesignal mit einer Frequenz zwischen 500 Hz und 1 kHz erzeugt wird.

7. Verfahren nach einem der Ansprüche 1 bis 5, wobei von der Steuerung (10) das Sendesignal mit zwei Frequenzen zwischen 500 Hz und 1 kHz erzeugt wird.

8. Verfahren nach einem der Ansprüche 1 bis 7, wobei von der Steuerung (10) die Bestimmung der Impedanz (Z) unter zusätzlicher Verwendung einer Länge der ersten Messleitung (6) und einer Länge der zweiten Messleitung (7) durchgeführt wird.

9. Magnetisch-induktives Durchflussmessgerät (1) mit einem Messrohr (2), einem Magnetfeldgenerator (3), einer ersten Messelektrode (4), einer zweiten Messelektrode (5), einer ersten Messleitung (6), einer zweiten Messleitung (7) und einer Steuerung (10) mit einem ersten Messanschluss (11) und einem zweiten Messanschluss (12),
wobei zum einen die erste Messelektrode (4) und der erste Messanschluss (11) über die erste Messleitung (6) und zum anderen die zweite Messelektrode (5) und der zweite Messanschluss (12) über die zweite Messleitung (7) elektrisch miteinander verbunden sind,
wobei der Magnetfeldgenerator (3) ausgebildet ist, ein Magnetfeld (15) in einem durch das Messrohr (2) strömenden Medium (16) zu erzeugen, sodass ein zwischen dem ersten Messanschluss (11) und dem zweiten Messanschluss (12) anliegendes Durchflusssignal in das Medium (16) induziert wird,
wobei die Steuerung (10) ausgebildet ist, einen Durchfluss des Mediums (16) durch das Messrohr (2) unter Verwendung des Durchflusssignals zu bestimmen,
**dadurch gekennzeichnet,**
**dass** die Steuerung (10) wie folgt ausgebildet ist:
- Erzeugen und Einspeisen eines Sendesignals (I) und Empfangen eines vom Sendesignal (I) bewirkten Empfangssignals (U) am ersten Messanschluss (11) und zweiten Messanschluss (12),
- Bestimmen einer Impedanz (Z) mit einem Impedanzbetrag und einer Impedanzphase unter Verwendung des Sendesignals (I) und des Empfangssignals (U) und
- Signalisieren eines Kurzschlusses, wenn der Impedanzbetrag kleiner als ein erster Grenzimpedanzbetrag und die Impedanzphase größer als eine Grenzimpedanzphase ist.

10. Magnetisch-induktives Durchflussmessgerät (1) nach Anspruch 9, **dadurch gekennzeichnet,**
**dass** das magnetisch-induktive Durchflussmessgerät (1) eine dritte Messleitung (8) und eine vierte Messleitung (9) und die Steuerung (10) einen dritten Messanschluss (13) und einen vierten Messanschluss (14) aufweist,
**dass** zum einen die erste Messelektrode (4) und der dritte Messanschluss (13) über die dritte Messleitung (8) und zum anderen die zweite Messelektrode (5) und der vierte Messanschluss (14) über die vierte Messleitung (9) elektrisch miteinander verbunden sind,
**dass** die Steuerung (10) ausgebildet ist, zum einen unter Verwendung des Sendesignals (I) und eines zwischen dem ersten Messanschluss (11) und dem dritten Messanschluss (13) anliegenden ersten Messsignals (U₁) eine Leitungsimpedanz (Z₁) der ersten Messleitung (6) zu bestimmen wird und zum anderen unter Verwendung des Sendesignals (I) und eines zwischen dem zweiten Messanschluss (12) und dem vierten Messanschluss (14) anliegenden zweiten Messsignals (U₂) eine Leitungsimpedanz (Z₂) der zweiten Messleitung (7) zu bestimmen
und **dass** die Steuerung (10) ausgebildet ist, die Leitungsimpedanz (Z₁) der ersten Messleitung (6) und die Leitungsimpedanz (Z₂) der zweiten Messleitung (7) bei der Bestimmung der Impedanz (Z) zu berücksichtigen.

11. Magnetisch-induktives Durchflussmessgerät (1) nach Anspruch 9 oder 10, **dadurch gekennzeichnet, dass** die Steuerung (10) ausgebildet ist, ein Verfahren nach einem der Ansprüche 1 bis 8 auszuführen.

## Claims

1. Method for operating a magnetic-inductive flowmeter (1),
wherein the magnetic-inductive flowmeter (1) comprises a measuring tube (2), a magnetic field generator (3), a first measuring electrode (4), a second measuring electrode (5), a first measuring line (6), a second measuring line (7) and a controller (10) having a first measuring terminal (11) and a second measuring terminal (12)
wherein, on the one hand, the first measuring electrode (4) and the first measuring terminal (11) are electrically connected to one another via the first measuring line (6) and, on the other hand, the second measuring electrode (5) and the second measuring terminal (12) are electrically connected to one another via the second measuring line (7),
wherein a medium (16) is made to flow through the measuring tube (2),
wherein a magnetic field (15) is generated by the magnetic field generator (3) in the medium (16) flowing through the measuring tube (2), so that a flow signal present between the first measuring terminal (11) and the second measuring terminal (12) is induced in the medium (16),
wherein a flow rate of the medium (16) through the measuring tube (2) is determined by the controller (10) using the flow rate signal,
wherein the following method steps are performed by the controller (10):
- generating and feeding a transmission signal (I) and receiving a receive signal (U) caused by the transmission signal (I) at the first measuring terminal (11) and second measuring terminal (12),
- determining an impedance (Z) having an impedance amount and an impedance phase using the transmission signal (I) and the receive signal (U), and
- signaling a short circuit when the impedance amount is less than a first limit impedance amount and the impedance phase is greater than a limit impedance phase.

2. Method according to claim 1, wherein the magnetic-inductive flowmeter (1) comprises a third measuring line (8) and a fourth measuring line (9) and the controller (10) comprises a third measuring terminal (13) and a fourth measuring terminal (14),
wherein, on the one hand, the first measuring electrode (4) and the third measuring terminal (13) are electrically connected to one another via the third measuring line (8) and, on the other hand, the second measuring electrode (5) and the fourth measuring terminal (14) are electrically connected to one another via the fourth measuring line (9),
wherein, on the one hand, a line impedance (Z₁) of the first measuring line (6) is determined by the controller (10) using the transmission signal (I) and a first measuring signal (U₁) present between the first measuring terminal (11) and the third measuring terminal (13) and, on the other hand, a line impedance (Z₂) of the second measuring line (7) is determined using the transmission signal (I) and a second measuring signal (U₂) present between the second measuring terminal (12) and the fourth measuring terminal (14)
and wherein the line impedance (Z₁) of the first measuring line (6) and the line impedance (Z₂) of the second measuring line (7) are taken into account by the controller (10) when determining the impedance (Z).

3. Method according to any one of claims 1 or 2, wherein the first limit impedance is selected as 50 ohms and the impedance phase is selected as -10°.

4. Method according to any one of claims 1 to 3, wherein a short circuit is also signaled when the impedance amount is smaller than a second limit impedance amount independent of the impedance phase, and wherein the second limit impedance amount is smaller than the first limit impedance amount.

5. Method according to claim 4, wherein the second limiting impedance amount is selected as 2 ohms.

6. Method according to any one of claims 1 to 5, wherein the transmission signal is generated by the controller (10) with a frequency between 500 Hz and 1 kHz.

7. Method according to any one of claims 1 to 5, wherein the transmission signal is generated by the controller (10) with two frequencies between 500 Hz and 1 kHz.

8. Method according to any one of claims 1 to 7, wherein the determination of the impedance (Z) is performed by the controller (10) with additional use of a length of the first measuring line (6) and a length of the second measuring line (7).

9. Magnetic-inductive flowmeter (1) with a measuring tube (2), a magnetic field generator (3), a first measuring electrode (4), a second measuring electrode (5), a first measuring line (6), a second measuring line (7) and a controller (10) with a first measuring terminal (11) and a second measuring terminal (12),
wherein, on the one hand, the first measuring electrode (4) and the first measuring terminal (11) are electrically connected to one another via the first measuring line (6) and, on the other hand, the second measuring electrode (5) and the second measuring terminal (12) are electrically connected to one another via the second measuring line (7),
wherein the magnetic field generator (3) is designed to generate a magnetic field (15) in a medium (16) flowing through the measuring tube (2), so that a flow signal present between the first measuring terminal (11) and the second measuring terminal (12) is induced in the medium (16),
wherein the controller (10) is designed to determine a flow rate of the medium (16) through the measuring tube (2) using the flow rate signal, **characterized in**
**that** the controller (10) is designed as follows:
- generating and feeding a transmission signal (I) and receiving a receive signal (U) caused by the transmission signal (I) at the first measuring terminal (11) and second measuring terminal (12),
- determining an impedance (Z) having an impedance amount and an impedance phase using the transmission signal (I) and the receive signal (U), and
- signaling a short circuit when the impedance amount is less than a first limit impedance amount and the impedance phase is greater than a limit impedance phase.

10. Magnetic-inductive flowmeter (1) according to claim 9, **characterized in**
**that** the magnetic-inductive flowmeter (1) has a third measuring line (8) and a fourth measuring line (9) and the controller (10) has a third measuring terminal (13) and a fourth measuring terminal (14),
**that**, on the one hand, the first measuring electrode (4) and the third measuring terminal (13) are electrically connected to one another via the third measuring line (8) and, on the other hand, the second measuring electrode (5) and the fourth measuring terminal (14) are electrically connected to one another via the fourth measuring line (9),
**that** the controller (10) is designed, on the one hand, to determine a line impedance (Z₁) of the first measuring line (6) using the transmission signal (I) and a first measuring signal (U₁) present between the first measuring terminal (11) and the third measuring terminal (13) and, on the other hand, to determine a line impedance (Z₂) of the second measuring line (7) using the transmission signal (I) and a second measuring signal (U₂) present between the second measuring terminal (12) and the fourth measuring terminal (14)
and **that** the controller (10) is designed to take into account the line impedance (Z₁) of the first measuring line (6) and the line impedance (Z₂) of the second measuring line (7) when determining the impedance (Z).

11. Magnetic-inductive flowmeter (1) according to claim 9 or 10, **characterized in that** the controller (10) is designed to perform a method according to any one of claims 1 to 8.

## Revendications

1. Procédé pour faire fonctionner un débitmètre magnéto-inductif (1),
le débitmètre magnéto-inductif (1) possédant un tube de mesure (2), un générateur de champ magnétique (3), une première électrode de mesure (4), une deuxième électrode de mesure (5), une première ligne de mesure (6), une deuxième ligne de mesure (7) et une commande (10) dotée d'une première borne de mesure (11) et d'une deuxième borne de mesure (12),
d'une part, la première électrode de mesure (4) et la première borne de mesure (11) étant reliées électriquement entre elles par le biais de la première ligne de mesure (6) et, d'autre part, la deuxième électrode de mesure (5) et la deuxième borne de mesure (12) par le biais de la deuxième ligne de mesure (7), un fluide (16) étant amené à s'écouler à travers le tube de mesure (2),
un champ magnétique (15) étant généré par le générateur de champ magnétique (3) dans le fluide (16) qui s'écoule à travers le tube de mesure (2), de sorte qu'un signal de débit présent entre la première borne de mesure (11) et la deuxième borne de mesure (12) est induit dans le fluide (16),
un débit du fluide (16) à travers le tube de mesure (2) étant déterminé par la commande (10) en utilisant le signal de débit,
les étapes suivantes étant exécutées par la commande (10) :
- génération et injection d'un signal d'émission (I) et réception d'un signal de réception (U) provoqué par le signal d'émission (I) au niveau de la première borne de mesure (11) et de la deuxième borne de mesure (12),
- détermination d'une impédance (Z) avec une valeur d'impédance et une phase d'impédance en utilisant le signal d'émission (I) et le signal de réception (U) et
- signalement d'un court-circuit lorsque la valeur d'impédance est inférieure à une première valeur d'impédance limite et que la phase d'impédance est supérieure à une phase d'impédance limite.

2. Procédé selon la revendication 1, le débitmètre magnéto-inductif (1) possédant une troisième ligne de mesure (8) et une quatrième ligne de mesure (9) et la commande (10) une troisième borne de mesure (13) et une quatrième borne de mesure (14),
d'une part, la première électrode de mesure (4) et la troisième borne de mesure (13) étant reliées électriquement entre elles par le biais de la troisième ligne de mesure (8) et, d'autre part, la deuxième électrode de mesure (5) et la quatrième borne de mesure (14) par le biais de la quatrième ligne de mesure (9),
la commande (10) déterminant d'une part une impédance de ligne (Z₁) de la première ligne de mesure (6) en utilisant le signal d'émission (I) et un premier signal de mesure (U₁) présent entre la première borne de mesure (11) et la troisième borne de mesure (13) et déterminant d'autre part une impédance de ligne (Z₂) de la deuxième ligne de mesure (7) en utilisant le signal d'émission (I) et un deuxième signal de mesure (U₂) présent entre la deuxième borne de mesure (12) et la quatrième borne de mesure (14) et l'impédance de ligne (Z₁) de la première ligne de mesure (6) et l'impédance de ligne (Z₂) de la deuxième ligne de mesure (7) étant prises en compte par la commande (10) lors de la détermination de l'impédance (Z).

3. Procédé selon la revendication 1 ou 2, la première valeur d'impédance limite étant choisie égale à 50 ohms et la phase d'impédance étant choisie égale à -10°.

4. Procédé selon l'une des revendications 1 à 3, un court-circuit étant également signalé lorsque la valeur de l'impédance est inférieure à une deuxième valeur d'impédance limite indépendante de la phase d'impédance, et la deuxième valeur d'impédance limite étant inférieure à la première valeur d'impédance limite.

5. Procédé selon la revendication 4, la deuxième valeur d'impédance limite étant choisie égale à 2 ohms.

6. Procédé selon l'une des revendications 1 à 5, le signal d'émission étant généré par la commande (10) à une fréquence comprise entre 500 Hz et 1 kHz.

7. Procédé selon l'une des revendications 1 à 5, le signal d'émission étant généré par la commande (10) à deux fréquences comprises entre 500 Hz et 1 kHz.

8. Procédé selon l'une des revendications 1 à 7, la détermination de l'impédance (Z) étant effectuée par la commande (10) en utilisant en plus une longueur de la première ligne de mesure (6) et une longueur de la deuxième ligne de mesure (7).

9. Débitmètre magnéto-inductif (1) comprenant un tube de mesure (2), un générateur de champ magnétique (3), une première électrode de mesure (4), une deuxième électrode de mesure (5), une première ligne de mesure (6), une deuxième ligne de mesure (7) et une commande (10) dotée d'une première borne de mesure (11) et d'une deuxième borne de mesure (12),
d'une part, la première électrode de mesure (4) et la première borne de mesure (11) étant reliées électriquement entre elles par le biais de la première ligne de mesure (6) et, d'autre part, la deuxième électrode de mesure (5) et la deuxième borne de mesure (12) par le biais de la deuxième ligne de mesure (7),
le générateur de champ magnétique (3) étant configuré pour générer un champ magnétique (15) dans le fluide (16) qui s'écoule à travers le tube de mesure (2), de sorte qu'un signal de débit présent entre la première borne de mesure (11) et la deuxième borne de mesure (12) est induit dans le fluide (16),
la commande (10) étant configurée pour déterminer un débit du fluide (16) à travers le tube de mesure (2) en utilisant le signal de débit,
**caractérisé en ce**
**que** la commande (10) est configurée comme suit :
- génération et injection d'un signal d'émission (I) et réception d'un signal de réception (U) provoqué par le signal d'émission (I) au niveau de la première borne de mesure (11) et de la deuxième borne de mesure (12),
- détermination d'une impédance (Z) avec une valeur d'impédance et une phase d'impédance en utilisant le signal d'émission (I) et le signal de réception (U) et
- signalement d'un court-circuit lorsque la valeur d'impédance est inférieure à une première valeur d'impédance limite et que la phase d'impédance est supérieure à une phase d'impédance limite.

10. Débitmètre magnéto-inductif (1) selon la revendication 9, **caractérisé en ce**
**que** le débitmètre magnéto-inductif (1) possède une troisième ligne de mesure (8) et une quatrième ligne de mesure (9) et la commande (10) une troisième borne de mesure (13) et une quatrième borne de mesure (14),
**que** d'une part, la première électrode de mesure (4) et la troisième borne de mesure (13) sont reliées électriquement entre elles par le biais de la troisième ligne de mesure (8) et, d'autre part, la deuxième électrode de mesure (5) et la quatrième borne de mesure (14) par le biais de la quatrième ligne de mesure (9),
**que** la commande (10) est configurée pour déterminer d'une part une impédance de ligne (Z₁) de la première ligne de mesure (6) en utilisant le signal d'émission (I) et un premier signal de mesure (U₁) présent entre la première borne de mesure (11) et la troisième borne de mesure (13) et pour déterminer d'autre part une impédance de ligne (Z₂) de la deuxième ligne de mesure (7) en utilisant le signal d'émission (I) et un deuxième signal de mesure (U₂) présent entre la deuxième borne de mesure (12) et la quatrième borne de mesure (14)
et **que** la commande (10) est configurée pour prendre en compte l'impédance de ligne (Z₁) de la première ligne de mesure (6) et l'impédance de ligne (Z₂) de la deuxième ligne de mesure (7) lors de la détermination de l'impédance (Z).

11. Débitmètre magnéto-inductif (1) selon la revendication 9 ou 10, **caractérisé en ce que** la commande (10) est configurée pour mettre en œuvre un procédé selon l'une des revendications 1 à 8.
